# EUROPEAN PATENT APPLICATION

(11) **EP 2 608 336 A1**
(43) Date of publication of application: **26.06.2013**
(21) Application number: 11010158.1
(22) Date of filing: 23.12.2011
(51) Int. Cl.: H02G 3/22, H02G 15/013, F16L 5/10, H01B 17/30

(54) **Sealing unit**

(71) Applicant: Tyco Electronics Raychem BVBA, 3010 Kessel-Lo (BE)
(72) Inventor: Kempeneers, Dirk, 3200 Aarschot (BE); Claessens, Bart, 3500 Hasselt (BE); Coeckelberghs, Diana, 3460 Bekkevoort (BE)
(74) Representative: Grünecker, Kinkeldey, Stockmair & Schwanhäusser

(57) **Abstract**

The present invention relates to a sealing unit (1; 100) for a cable opening, the sealing unit (1; 100) comprises at least two sealing members (10, 20; 110, 120) abutable against each other for providing there between at least one cable passage (2; 102) for receiving and sealingly guiding a cable therethrough. The inventive sealing unit (1; 100) provides sealing of a cable passage (2; 102) irrespective whether a cable is received therein or not with a deuced number of parts and is characterized in that at least one of the two sealing members (10, 20; 110, 120) comprises a cable passage seal (12; 112) for sealing the cable passage (2; 102), wherein the cable passage seal (12; 112) is elastically bendable to be pushed away by the cable for enabling sealingly guiding of the cable through the cable passage (2; 102).

## Description

The present invention relates to a sealing unit for a cable opening.

Sealing units are used to protect internal components from degradation caused by external environments. For example, internal components, such as fiber optic cables and copper cables are all often enclosed in closure systems having at least one cable opening for incoming and/or outgoing cable, which opening is sealed by such sealing unit. Examples of commercially available closure systems having at least one sealing unit include the outdoor fiber drop repair (OFDR), the outdoor fiber distribution closure (OFDC) and the fiber optic infrastructure system technology (FIST), available from Tyco Electronics, Kessel-Lo, Belgium. In particular, the OFDR closure is used to break out fibers from a looped fiber optic cable to connect users, such as business customers or persons in multiple or single living units. These types of closures can be used in aerial, pedestal, and underground environments. Other closure systems are commercially available for use with communication and energy transmission cables.

Closure systems typically include internal components, such as fiber organizers, cable seals and termination devices, drop cable seals for a number of drops with drop cable termination devices, and universal splice holders for a number of splices. These internal components may be subject to environmental factors, such as varying moisture levels, heat and cold, and exposure to chemical substances. Therefore, it is of utmost importance to perfectly protect the closure systems from environmental influence. Apart from any housing of the closure system, which is to provide sufficient durability against external impact, the sealing unit provided in the cable opening has to prevent external environmental factors from negatively effecting the components contained within the closure system.

In particular in fiber optical technology, need arises to sealingly guide multiple cables through the opening. Further, the numbers of individual cables guided through an individual cable opening may vary. Irrespective of the actual number and possibly varying size of individual cables going into the closure system, perfect sealing of the opening is required.

A sealing unit according to the preamble of claim 1 is known from US 5,266,743, which sealing unit has an inner sealing member provided by a sheath, the outer circumference thereof provides support for multiple cables, and a seal member wrapped around the sheath, thereby enclosing the multiple cables in a sealing manner between the outer circumference of the sheath and inner circumferential surface of the seal member. The seal member is an elongated strip of resilient and flexible material, such as polyurethane, silicon, or a thermoplastic material and comprises a plurality of transversely extending grooves or cavities forming continuous channels extending essentially in a longitudinal direction of the sheath. Each cavity has a generally circular cross-sectional shape of a diameter corresponding approximately to the diameter of the cable, which cavity is open to an inner surface of the seal member, which inner surface abuts against the outer surface of the sheath.

This sealing unit is placed into a bore of a sealing plug assembly, which bore has a diameter corresponding essentially to the outer diameter of the sealing unit. Compression plates having bores with a diameter slightly smaller than the outer diameter of the sealing unit are secured against the sealing plug element, thereby axially compressing the seal member to secure a tight seal.

The known sealing unit and the further equipment required to fully seal the opening for guiding there through the at least one cable is disadvantageous. The known solution is rather complex and, hence, not cost effective. Further, if the number of cables passing the seal member in axial direction does not match with the number of cavities formed in said seal member, those cavities may form passages, which are open in longitudinal direction of the sealing unit. Thus, the sealing is insufficient. This problem in particular arises, if the number of cables is by far less than the numbers of cavities provided in the seal member.

The present invention has been made to cope with the aforementioned problems. It is in particular an object of the present invention to provide a sealing unit for use with a cable, in particular a fiber optical cable, which sealing unit is capable of attaining improved seal even in the event, the sealing unit only plugs the cable opening of a closure system without guiding at least a single cable through the sealing unit.

As a solution to the above object, the present invention provides a sealing unit as defined in claim 1. This sealing unit has at lest two sealing members abutable against each other for providing there between at least one cable passage. This passage is adapted to receive and sealingly guide a cable therethrough. At least one of the two sealing members comprises a cable passage seal, which is adopted to seal the cable passage. Thus, if no cable is guided through the sealing unit, the passage seal seals the cable passage, thereby providing sealing by means of the inventive sealing unit even in absence of any cable guided therethrough. The cable passage seal of the inventive sealing unit is elastically bendable to be pushed away by the cable for enabling sealingly guiding of the cable through the cable passage. Thus, and by means of the cable passage seal, the cable passage can be perfectly sealed in absence of a cable guided through the sealing unit, while it allows sealingly guiding the cable therethrough by elastically bending the cable passage seal away, i.e. removing said cable passage seal from the cable passage, while the cable passage seal forms part of one or both of sealing member. Thus, the sealing unit can provide such sealing characteristic with only two separate members.

The inventive sealing unit may preferably comprise a plurality of cable passage seals, preferably between the outer circumferential surface of one of the sealing members and the inner circumferential surface of the other of the two sealing members. As in prior art US 5,266,743 one of the sealing members may be formed as an inner sealing member with a essentially disc-shape form, while the other of the two sealing members is formed ring-shaped circumferentially encompassing the inner sealing member.

According to a preferred embodiment of the present invention, a cable passage seal comprises an obstruction section arranged in front of a longitudinal end of the cable passage. This obstruction section is adapted to protrude into a cable channel usually provided by the other sealing member and is bendable by a cable received within the cable passage. In this preferred embodiment, the cable channel has essentially a constant circumferential shape throughout the length of the cable passage provided within the sealing unit. The obstruction section may project into the cable channel at a longitudinal end thereof. Most preferably, the one sealing member being provided with the obstruction section has a slightly larger longitudinal extension than the other sealing member providing the cable channel. Thus, the obstruction section can be provided at the mouth of the channel and be partially received therein, while a portion of the obstruction section may project the cable channel in longitudinal direction thereof. Most preferably, two obstruction sections are provided by the one sealing member. In other words, in extension direction of the cable channel, the one sealing member has two obstruction sections at opposing ends, with both obstruction sections partially projecting the other sealing member in the extension direction of the cable channel.

For facilitating removal of the obstruction section in case of a cable received within the assigned cable passage, the obstruction section of the inventive sealing unit is preferably arranged, such that it is bendable by the cable received within the cable passage around an axis extending essentially transverse to the longitudinal direction of the cable passage. In other words, the obstruction section is adapted to be pivotable between a first position, in which the obstruction section obstructs the cable section, with the maximum extension of the obstruction section extending preferably in a plane, which is perpendicular to the axis of the cable passage, and a second position, in which the obstruction section allows guiding of a cable through the cable passage. In the second position, the obstruction section will most likely abut against the outer circumference of the cable.

However, sealing of the cable is most preferably attained by a sealing section arranged in the middle of one of the sealing members, where the middle position essentially corresponds to half of the extension of the cable passage in its extending direction. Usually, the sealing section is provided between two obstruction sections assigned to opposing ends of the cable passage. The sealing section is adapted to sealingly engage a cable received within the cable passage between the one sealing member and the other sealing member. For this, the one sealing member encircles the cable partially, while the other sealing member encircles the remaining circumferential surface of the cable. In other words, the two sealing members at a sealing section of the one sealing member are complimentary to circumferentially and tightly enclose the outer circumferential surface of the one cable received in the cable passage.

According to a preferred embodiment, there is provided an inner sealing member providing at its outer circumferential surface at least one cable channel. This cable channel extends transversely to the circumferential direction of the outer circumferential surface. A transverse extension can, however, be realized with a cable channel extending slightly oblique to a longitudinal, i.e. axial extension of the inner sealing member as, e.g. known from US 5,266,743. Accordingly, the cable channel may extend transversely to an axial direction of the inner sealing member of up to 30°. This cable channel is accessible from the outer circumferential surface side direction in order to arrange a cable therein in a simple fashion. The preferred embodiment furthermore has an outer sealing member with an inner surface configured to at least partially cover the outer circumferential surface. On a regular basis, the inner sealing member will provide multiple cable channels throughout the entire circumferential surface of the inner sealing member, while the outer sealing member is adapted to fully cover the outer circumferential surface of the inner sealing member. The outer sealing member furthermore is adapted to cover the at least one cable channel to form the cable passage between the inner and the outer sealing member. On a regular basis, the outer sealing member is the sealing member comprising the at least one obstruction section projecting into the cable passage and sealing the same in absence of a cable received therein.

According to a preferred embodiment, the outer sealing member is made of a strip formed to a ring. This strip has longitudinal end sections, which are arranged in parallel with each other. In other words, when being formed to a ring and encircling the inner sealing member, the longitudinal end sections overlap each other as seen in the axial direction. Thus, a cable passage being surrounded by the longitudinal end sections will have a longitudinal section being covered by the one longitudinal end section of the strip, while another longitudinal end section of the cable passage will be covered by the other longitudinal end section of the strip.

According to a preferred embodiment, a number of cable passage seals equal to a number of cable channels projects from the inner surface of the outer sealing member. Each of the cable passage seals is correspondingly arranged with respect to a thereto associated cable channel to seal the cable passage in a covered state of the inner sealing member. This preferred embodiment of the present invention provides multiple cable passages, which are perfectly sealed in absence of a cable within each cable channel, but is adapted to also receive a plurality of cables, each within a single cable channel. Thus, the preferred embodiment of the present invention is in particular suitable for sealing multiple optical fibers extending through an cable opening of a closure system, which number of optical fiber cable extending through the opening may vary to a great extent, while the one and only sealing unit provides appropriate sealing.

According to a further preferred alternate embodiment, the outer sealing member is joined on a lateral side of the at least one cable channel to an outer circumferential surface of the inner sealing member by an elastically bendable joint portion. This joint portion usually serves as a hinge to pivotably support the outer sealing member. Thus, the joint portion provides a pivot axis, which extends transverse to the longitudinal direction of the at least one cable channel. About said axis the longitudinal free end of the outer sealing member is pivotable to radially protrude the longitudinal end of the cable passage, at least in a bent state of the joint portion. Thus, by pivoting about the pivot axis, the outer sealing member may pivot to seal and preferably clamp a cable received within the assigned cable passage between the inner and the outer sealing member. This preferred embodiment of the present invention is advantageous as the inner sealing member and the outer sealing member may be provided within a unitary body. Thus, use of the sealing unit within the field is facilitated as the number of individual parts is minimized.

This unitary part may preferably be made by injection molding of a thermoplastic material, preferably of a thermoplastic elastomer or a thermoplastic material coated with a thermoplastic elastomer, preferably by two- or more component injection molding. For improved sealing, the surfaces defining the cable passage of the sealing unit should preferably be formed by a resilient material like e.g. a thermoplastic elastomer. Manufacturing of the sealing unit by injection molding will also be feasible to provide an elastically bendable joint portion joining the outer sealing member on the lateral side of the at least one cable channel to the outer circumferential surface of the inner sealing member. Such joint portion may be formed as a film hinge. In such preferred constitution, the inner surface of the outer sealing member obliquely extends with respect to the outer circumferential surface of the inner sealing member in longitudinal direction of the at least one cable channel in an unbent, i.e. relaxed state of the joint portion. Accordingly, the elastically bendable joint portion will render the outer sealing member to extend obliquely with respect to the outer circumferential surface of the inner sealing member in absence of an outer force acting on the outer sealing member. Thus, easy access to the cable channel is provided.

According to an preferred embodiment of the present invention, the outer sealing member comprises a pair of complementary outer seal portions assigned to seal a single cable passage, wherein each of the pair of the outer sealing member portions is pivotably connected to the inner sealing member by means of different of said joint portion s. Accordingly, a single cable passage is freely accessible from the outer circumferential side between two outer sealing members. Nevertheless, thorough sealing of the cable channel is attained in absence of a cable being received therein by the two complementary outer sealing member portions rendering a pair assigned to seal the single cable passage.

According to a preferred embodiment of the present invention, the pair of complementary outer sealing member portions each has a cable passage seal lip. Those passage seal lips are adapted to form a cable passage seal in the bent state of the joint portion, i.e. in the pretensioned status of the joint portion, in which the outer sealing member is biased against the inner sealing member, e.g. the inner circumferential surface of a bore of a housing of a closure system or the like. Those cable passage seal lips are further adapted to elastically bend in circumferential direction of the inner seal member by the cable. If a cable is received within the assigned cable channel, the seal lips will essentially be bent transversely to the main extension direction of the cable, i.e. in the circumferential direction of the inner sealing member. The cable passage seal lips may contribute to sealing of the cable in the cable passage in this elastically bent state. However, on a regular basis the outer sealing member is designed such that the cable received within the assigned cable channel is sealed by complementary surfaces of the outer sealing member provided at the lateral side comprising the bendable joint. Accordingly, one lateral end side of the outer sealing member is preferably designed to seal the cable channel in absence of a cable received therein, while the other lateral end is adapted to sealingly encompass the cable received within the cable channel. On both lateral end sides, two complementary outer sealing members are assigned to either seal the cable channel in absence of a cable or seal such cable within the cable channel. Sealing is attained by sealing surfaces provided by two complementary outer sealing members and a complementary inner circumferential surface section of the inner sealing member.

According to a preferred embodiment, the inner sealing member comprises at least two adjacent cable channels. Preferably, the inner sealing member is provided with cable channels throughout the entire circumference of the inner sealing member. The outer sealing member comprises two pairs of complementary outer sealing members for sealing the at least two cable channels. An outer sealing portion provided between the two cable channels forms part of each of said pairs of said complementary outer sealing portions. Each outer sealing member portion comprises at its longitudinal end two cable passage seal lips spaced apart from each other in circumferential direction of the inner sealing member to allow elastically bending of the cable passage seal lips toward each other in the bend state of the joint portion s. Thus, the two cable passage seal lips provided on the two longitudinal ends of a single outer sealing member are designed such that they allow bending to an extent necessary for guiding a cable through each of the cable passages, in which the cable passage seal lips extend in a non-bent state. Accordingly, a sealing unit in accordance with this preferred embodiment is suitable to provide multiple cable passages distributed in circumferential direction of the sealing unit, with two cable passage seal lips extending from the outer sealing members being capable to either seal a cable passage in absence of any cable received therein, or allow sealing receipt of cables in each of the cable channels provided.

According to a further preferred embodiment, the outer circumferential surface of the outer sealing member has a conical outer circumferential surface. This outer circumferential surface is usually realized in the relaxed state of the bendable joint portion. The lateral end side of the outer sealing member being provided with the joint portion defines the smaller outer diameter side, whereas the other lateral end side defines the larger outer diameter side of the conical outer circumferential surface. The smaller outer diameter side is usually selected to be slightly smaller than the inner diameter of a bore or the like receiving the sealing unit, which bore defines the cable opening. Thus, the sealing unit is inserted into the bore with its smaller diameter side. By pushing the sealing unit in axial direction, the outer sealing member is bent to finally correspond with a cylindrical constitution of the bore, thereby sealingly engaging either a cable received within a cable channel or with the cable sealing lips, a cable channel not receiving a cable.

The invention will be described hereinafter in greater detail and in an exemplary manner by means of advantageous embodiments of the invention and with reference to the drawing. The described embodiment are feasible configurations, in which, however, the individual features as described above can be provided independently of one another or can be omitted. In the drawing:
- figure 1: is a plane view of a first embodiment of an inventive sealing unit;
- figure 2: is a plane view of the outer sealing member of the embodiment according to figure 1;
- figure 3: is a perspective view of the embodiment of the outer sealing member of the first embodiment;
- figure 4: is a plane view of the outer sealing member of the first embodiment in an unwound state;
- figure 5: is a perspective plane view of a second embodiment of the inventive sealing unit;
- figure 6: is a perspective plane view of the embodiment of figure 5 in an opposite direction of figure 5; and
- figure 7: is a view transverse to the longitudinal direction of the second embodiment.

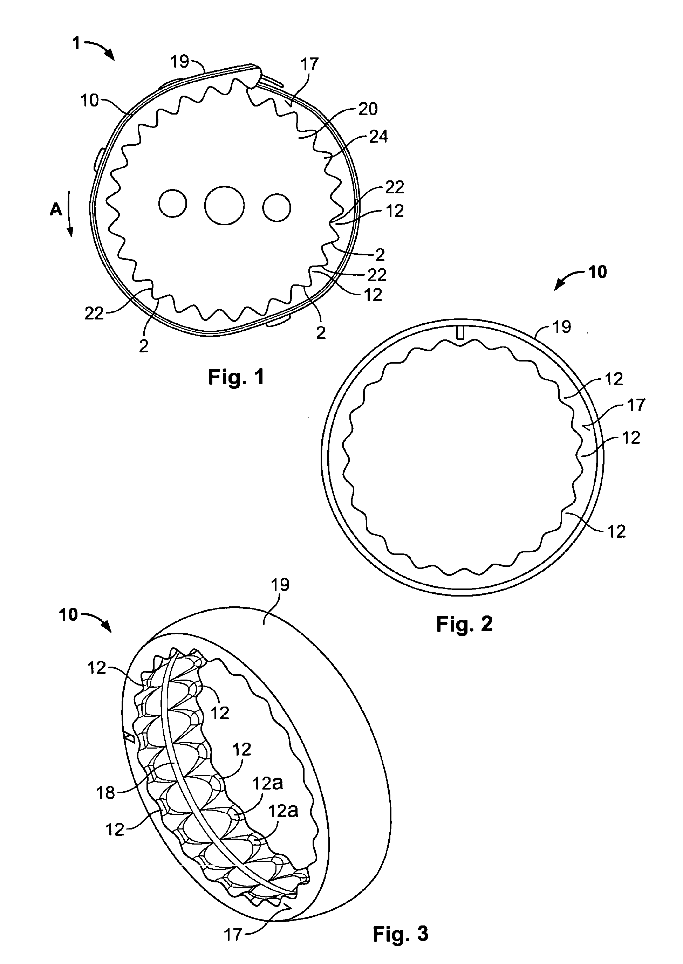

Figure 1 shows a plane view of a first embodiment of a sealing unit 1 for a cable opening (not shown). The sealing unit 1 comprises an outer sealing member 10 and an inner sealing member 20. This inner sealing member 20 is provided with a plurality of grooves 22 extending in axial direction of the disc-shape inner sealing member 20, which grooves 22 are distributed over the outer circumferential surface 23. The grooves 22 are separated by projections 24. The grooves 22 and the projections 24 have a rounded contour. Between the inner sealing member 20 and the outer sealing member 10, cable passages 2 are formed. Those cable passages 2 are predominately formed by the grooves 22, which grooves 22 are assigned to cable passage seals 12 of the outer sealing member 10, which cable passage seals 12 project into the groove 22.

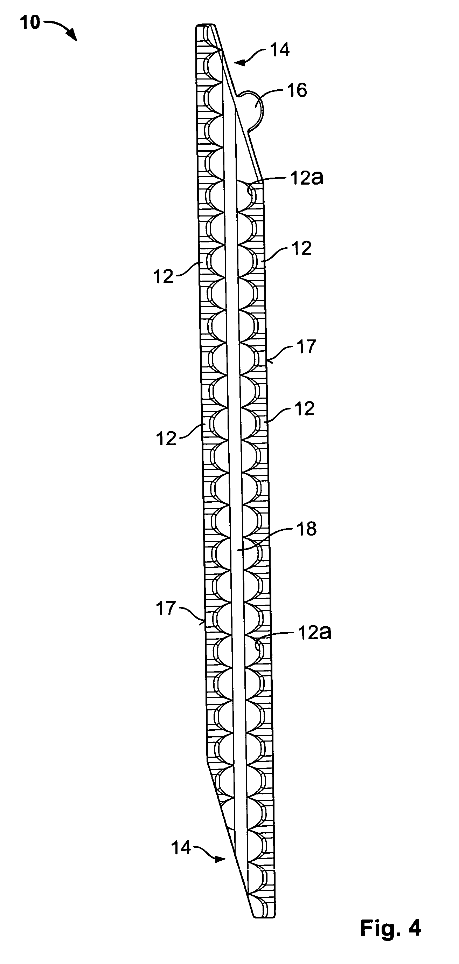

As in particular evident from figure 4, the outer sealing member 10 is made of a strip element, which is wound to provide the ring-shaped outer sealing member 10 depicted in figures 1 to 3. The strip has longitudinal end sections 14, which are chamfered in a complementary fashion. One of the longitudinal end sections 14 is laterally projected by a locking projection 16, for which a locking receptacle (not visible in figure 4) is provided on an outer surface of the strip element adapted to receive the locking projection 16. The inner surface identified with reference numeral 18 provided in a middle section of the strip element as seen in a transverse direction is essentially flat in a cross sectional view. The lateral ends of the inner side of the strip element is projected by the cable passage seals identified with reference numeral 12, which cable passage seals 12 each provide an obstructions section 12a arranged in vicinity of the lateral edges of the strip.

When being wound around the inner sealing member 20, two cable passage seals 12 at a same length area in width direction of the strip are assigned to a single groove 22, thereby projecting into the groove 22. In particular, the obstruction section 12a is adapted to sealingly abut against the axial end sections of each groove 22, thereby sealing the groove 22.

In view of this, it is evident that the strip when being wound around the inner sealing member 20 to form the outer sealing member 10 is adapted to enclose cable passages 12 to form the same between the inner sealing member 20 and the outer sealing member 10 with the cable passage seals 12 and in particular the obstructions sections 12a to protrude into the cable passage 12 and thereby to seal the same in axial direction.

While the mid-section of the outer sealing member 10 identified with reference numeral 18 provide a cylindrical surface abutting against the projections 24 and providing a sealing section 12b for a cable received within the cable passage 2, the cable passage seals 12, arranged in front of the cable passage 12 in an non-bent orientation will be bent outwardly to protrude the cable passage 12, in the event a cable is received therein. In the course of such bending of the cable passage seals 12, the same will pivot about an axis extending essentially transverse to the longitudinal direction of the cable passage 2. In other words, in the bent state the cable passage seals 12 will project the parallel, ring-shaped end faces 17 of the outer sealing member 10.

Respective sealing is enhanced by inserting the embodiment shown in figures 1 through 3 into a cable opening of e.g. a closure system for including in particular optical components for organizing and/or joining optical fiber cables. Such enhanced sealing is facilitated by the elastic properties of the inner and the outer sealing members 10, 20, which are usually made of rubber, an elastomer or a thermoplastic elastomer or are at least coated with one of those materials with a less soft core material regularly a thermoplastic material underlying this coating.

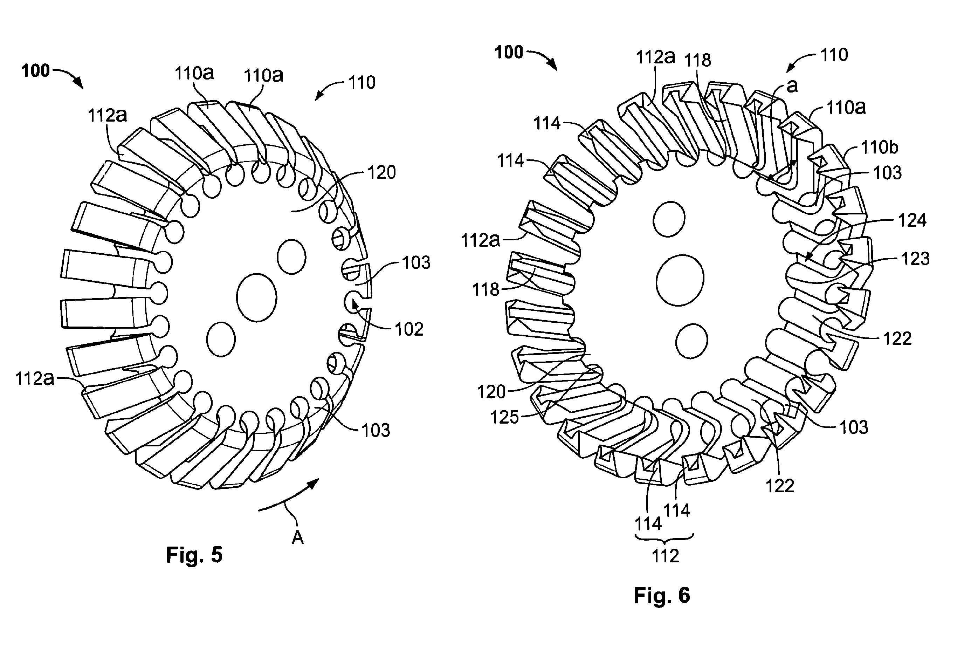

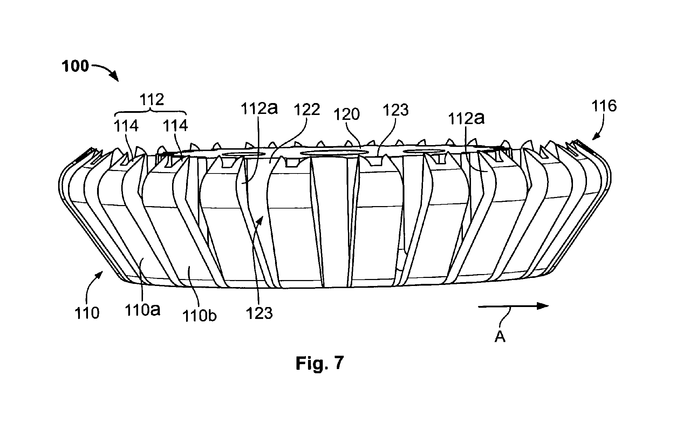

Figures 5 through 7 elucidate a second embodiment of the inventive sealing unit 100. This second embodiment comprises an inner sealing member identified with reference numeral 120 and multiple outer sealing members identified with reference numeral 110. As in the first embodiment, the inner sealing member 120 provides at its outer circumferential surface 12 a plurality of grooves 122 extending transversely to a circumferential direction identified with reference sign A in figure 7 of the outer circumferential surface 123. Between the groove 122, the outer sealing members 110 are each connected to the inner sealing member 120 by a joint portion 103, thereby providing access to each cable passage identified with reference numeral 102, i.e. to the groove 122. Thus, each of the outer sealing members 110 of the second embodiment is adapted to partially cover the outer circumferential surface of one groove and will completely cover one projection 124 arranged between to adjacent grooves 122. Respective projection 124 essentially cooperates with a ridge 125, which ridge 125 separates two outer sealing member portions 118 provided on the inner surface of each outer sealing member 110. Each sealing member portion 118 is adapted to cooperate with a cable received within the groove 122. Thus, a single cable channel is essentially formed by the groove 122 covered by two outer sealing member portions 118. With those three elements, a cable channel is defined, which channel has an inner diameter essentially corresponding to the outer diameter of the cable received therein. In other words, the two outer sealing member portions 118 of two adjacent outer sealing members 110 are adapted to sealingly engage a single cable. The two outer sealing member portions 118 formed by a single outer sealing member 110 are assigned to different grooves 122.

On a lateral side opposed to the joint portion 103, each outer sealing member 110 is provided with two cable passage seal lips 114, wherein cable passage seal lips 114 of adjacent outer sealing members forming a pair 110a, 110b (cf. figure 7) constitute a pair of cable passage seals 112 assigned to a single cable passage 102.

From the above, it follows that a pair of outer sealing members 110a, 110b, which outer sealing members 110a, 110b are located adjacent to each other, provides sealing of a cable passage 102 in absence of a cable received therein by two complementary seal lips forming as a pair 114a, 114b the cable passage seal 112 of a single cable passage. In the event a cable is received within said cable passage, the seal lip pair 114a, 114b is bent outwardly by the cable, which cable is sealed between outer sealing portions 118 of the pair of outer sealing members 110a, 110b. Accordingly, the cable passage 102 is accessible from the outer circumference of the sealing unit identified with reference numeral 100 in figures 5 through 7.

Those figures elucidate the sealing unit 100 in a released state of each outer sealing member 110. In other words, the joint portion 103 is shown in a unbent, i.e. relaxed state, in which the outer sealing members 110 are each arranged in a chamfered fashion relative to the axial extension of the sealing unit 100. The smaller outer diameter side defined by the outer sealing members 110 is arranged at the lateral end being provided with the joint portion s 103, while the larger outer diameter side is defined by the lateral end being provided with the cable passage seal lips 114.

For assembly of the second embodiment elected cable passages 102 are provided with cables. Then, the sealing unit 100 is inserted into a cable opening of e.g. a closure system (not shown) with the smaller outer diameter side of the sealing unit 100 entering the cable opening first. Due to the conical constitution of the sealing unit 100 in the relaxed state of the joint portion s 100, the outer sealing members 110 will be pivoted about the joint portion s 103, i.e. an axis, which extends transversely to the longitudinal direction of each groove 122 to finally exhibit a cylindrical constitution, in which the cable passage seals 112 provided by the pair 112 of two adjacent cable passage seal lips 114a, b seal those cable passages 102 having no cable, whereas the inner surface 118 of a pair of outer sealing members 110a, 110b lie against the outer circumferential surface of a cable received within the assigned cable passage 102, thereby sealing the cable together with the surfaces of the groove 122 provided by the inner sealing member 120.

### Reference signs list

- 1, 100: sealing unit
- 2, 102: cable passage
- 103: joint portion
- 10, 110, 110a, 110b: outer sealing member
- 12, 112: cable passage seal
- 12a: obstruction section
- 12b: sealing section
- 14: longitudinal end section
- 114: cable passage seal lips
- 16: locking projection
- 17: end face
- 18: inner surface of the outer sealing member/
- 118: outer sealing member portion
- 20, 120: inner sealing member
- 22, 122: groove
- 23, 123: outer circumferential surface
- 24, 124: projection
- 125: ridge
- A: circumferential direction

## Claims

1. A sealing unit (1; 100) for a cable opening, the sealing unit (1; 100) comprises at least two sealing members (10, 20; 110, 120) abutable against each other for providing there between at least one cable passage (2; 102) for receiving and sealingly guiding a cable therethrough,
**characterized in that**
at least one of the two sealing members (10, 20; 110, 120) comprises a cable passage seal (12; 112) for sealing the cable passage (2; 102), wherein the cable passage seal (12; 112) is elastically bendable to be pushed away by the cable for enabling sealingly guiding of the cable through the cable passage (2; 102).

2. The sealing unit (1; 100) according to claim 1, **characterized in that** the cable passage seal (12; 112) comprises an obstruction section (12a) arranged in front of a longitudinal end of the cable passage (2; 102) adopted to protrude into a cable channel (22) provided by the other sealing member (20, 120) and bendable by a cable received within the cable passes (2, 102) away therefrom.

3. The sealing unit (1; 100) according to claim 1 or 2, **characterized in that** the obstruction section (12a) is adapted to be bendable by a cable received within the cable passage (2; 102) around an axis extending essentially transverse to the longitudinal direction of the cable passage (2; 102).

4. The sealing unit according to claims 2 or 3, **characterized in that** one of said sealing members (10) comprises two obstruction sections (12a) assigned to opposing ends of the cable passage (2; 102) and a sealing section (12b) arranged therebetween adapted to sealingly engage a cable received within the cable passage (12; 102) between said sealing member (10) and the other sealing member (20).

5. The sealing unit (1; 100) according to anyone of the preceding claims,
**characterized by** an inner sealing member (20; 120) providing at its outer circumferential surface (23; 123) at least one cable channel (22; 122), which extends transversely to a circumferential direction (A) of the outer circumferential surface (23; 123) and which is accessible from the outer circumferential surface side direction and an outer sealing member (10; 110) with an inner surface (18; 118) configured to at least partially cover the outer circumferential surface (24; 124) and the at least one cable channel (22; 122) to form the cable passage (2; 102) between the inner and outer sealing members (20, 120; 10; 110).

6. The sealing unit (1; 100) according to claim 5, **characterized in that** the outer sealing member (10) is made of a strip formed to a ring, in which longitudinal end sections (14) of the strip are arranged in parallel with each other.

7. The sealing unit (1) according to claim 5 or 6, **characterized in that** a number of cable passage seals (12) equal to a number of cable channels (22) projects from the inner surface (18) of the outer sealing member (10), wherein each of the cable passage seals (12) is correspondingly arranged with respect to a thereto associated cable channel (22) to seal the cable passage (2) in a covered state of the inner sealing member (20).

8. The sealing unit (100) according to claim 5, **characterized in that** the outer sealing member (110) is joined on a lateral side of the at least one cable channel (122) to an outer circumferential surface (124) of the inner sealing member (120) by an elastically bendable joint portion (103), wherein the joint portion (103) provides a pivot axis which extends transverse to the longitudinal direction of the at least one cable channel (122) and about which a longitudinal free end of the outer sealing member (110) is pivotable to protrude the longitudinal end (14) of the cable passage (122) at least in a bent state of the joint portion (103), in which state the inner surface (118) is close to the outer circumferential surface (124).

9. The sealing unit according to claim 8, **characterized in that** the outer sealing member (110) is joined on the lateral side of the at least one cable channel (122) to the outer circumferential surface (123) of the inner sealing member (120) by the elastically bendable joint portion (103), such that the inner surface (118) of the outer sealing member (110) obliquely extends with respect to the outer circumferential surface (123) of the inner sealing member (120) in longitudinal direction of the at least one cable channel (122).

10. The sealing unit (100) according to claim 8 or 9, **characterized in that** the outer sealing member (110) comprises a pair (110a, 110b) of complementary outer
sealing member portions assigned to seal a single cable passage (102), wherein each of the pair (110a, 110b) of outer sealing member portions is pivotably connected to the inner sealing member (120) by means of different of said joint portion s (103).

11. The sealing unit (100) according to claim 10, **characterized in that** each of the pair (110a, 110b) of complementary outer sealing member portions has a cable passage seal lip (114), wherein said cable passage seal lips (114) form the cable passage seal (112) in the bent state of the joint portions (103), and wherein each of the cable passage seal lips (114) is elastically bendable in circumferential direction of the inner sealing member (120) by the cable.

12. The sealing unit (100) according to claim 10 or 11, **characterized in that** the inner sealing member (120) comprises at least two adjacent cable channels (122), and the outer sealing member (110) comprises two pairs (110a, 110b) of complementary outer sealing members for sealing said at least two cable channels (122), wherein an outer sealing member portion provided between the two cable channels (122) forms part of each of said pairs (110a, 110b) of said complementary outer sealing member portions and comprises at its longitudinal end two cable passage seal lips (114) spaced apart from each other in circumferential direction of the inner sealing member (120) to allow elastically bending of the cable passage seal lips (114) toward each other in the bent state of the joint portions (103).

13. Sealing unit (100) according to claims 5 through 12, **characterized in that** the outer circumferential surface of the outer sealing member (110) has a conical outer circumferential surface.
